(19) Europäisches Patentamt
European Patent Office
Office européen des brevets

(11) **EP 4 787 729 A1**

(12) **EUROPEAN PATENT APPLICATION**
published in accordance with Art. 153(4) EPC

(43) Date of publication:
**05.08.2026 Bulletin 2026/32**

(21) Application number: **24884651.1**

(22) Date of filing: **28.10.2024**

(51) International Patent Classification (IPC):
***H04B 7/06*** (2006.01)   ***H04B 7/08*** (2006.01)

(52) Cooperative Patent Classification (CPC):
**H04B 7/06; H04B 7/08**

(86) International application number:
**PCT/CN2024/127689**

(87) International publication number:
**WO 2025/092648 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2023 CN 202311436022**

(71) Applicant: **HUAWEI TECHNOLOGIES CO., LTD.
Shenzhen, Guangdong 518129 (CN)**

(72) Inventors:
• **ZHANG, Haibo
Shenzhen, Guangdong 518129 (CN)**
• **WANG, Bin
Shenzhen, Guangdong 518129 (CN)**

(74) Representative: **Gill Jennings & Every LLP
The Broadgate Tower
20 Primrose Street
London EC2A 2ES (GB)**

(54) **TRANSMITTING DEVICE, RECEIVING DEVICE, TRANSMITTING METHOD AND RECEIVING METHOD**

(57)    This application provides a sending apparatus, a receiving apparatus, a sending method, and a receiving method. The sending apparatus includes N radio frequency units connected in series. The N radio frequency units connected in series include a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$. The $n^{th}$ radio frequency unit is configured to: obtain an $n^{th}$ delay, where the $n^{th}$ delay indicates a delay of data transmission between the $n^{th}$ radio frequency unit and a reference radio frequency unit in the N radio frequency units; obtain first baseband data from a baseband unit (when n=1) or an $(n-1)^{th}$ radio frequency unit (when $1<n \leq N$); and perform a first operation on the first baseband data based on the $n^{th}$ delay to obtain first radio frequency data, and transmit the first radio frequency data, where the first operation includes an amplitude-phase weighting operation. According to the technical solutions provided in embodiments of this application, a topology structure of a beamforming-related apparatus or system can be simplified.

FIG. 3

## Description

This application claims priority to Chinese Patent Application No. 202311436022.8, filed with the China National Intellectual Property Administration on October 31, 2023 and entitled "SENDING APPARATUS, RECEIVING APPARATUS, SENDING METHOD, AND RECEIVING METHOD", which is incorporated herein by reference in its entirety.

## TECHNICAL FIELD

This application relates to the communication field, and specifically, to a sending apparatus, a receiving apparatus, a sending method, and a receiving method.

## BACKGROUND

A phased array antenna is a core component of a network device and user equipment in a communication system. Beamforming is a core technology of phased array antennas. In a digital beamforming technology, a ratio of a quantity of beams to a quantity of antenna units may be flexibly adjusted as required, implementing free switching between a multi-beam scenario and a high-gain scenario.

A digital phased array generally uses a star topology structure, and includes a baseband unit and a plurality of radio frequency units. The radio frequency unit and the baseband unit are connected to each other through a high-speed interface. If the digital phased array is large and there are a large quantity of radio frequency units, switches are added between the radio frequency units and the baseband unit to implement port extension and data switching.

However, as a scale of the digital phased array increases, system complexity, quantities of ports and cables of the baseband unit, and complexity of the baseband unit all increase greatly.

## SUMMARY

This application provides a sending apparatus, a receiving apparatus, a sending method, and a receiving method, to simplify a topology structure of a beamforming-related system or apparatus, and reduce a quantity of ports and bandwidth requirements of a baseband data processing apparatus or unit.

According to a first aspect, a sending apparatus is provided. The sending apparatus includes N radio frequency units connected in series. The N radio frequency units connected in series include a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$. The $n^{th}$ radio frequency unit is configured to: obtain an $n^{th}$ delay, where the $n^{th}$ delay indicates a delay of data transmission between the $n^{th}$ radio frequency unit and a reference radio frequency unit in the N radio frequency units; obtain first baseband data from a baseband unit or an $(n-1)^{th}$ radio frequency unit; and perform a first operation on the first baseband data based on the $n^{th}$ delay to obtain first radio frequency data, and transmit the first radio frequency data, where the first operation includes an amplitude-phase weighting operation. When n=1, the $n^{th}$ radio frequency unit is configured to obtain the first baseband data from the baseband unit; or when $1 < n \leq N$, the $n^{th}$ radio frequency unit is configured to obtain the first baseband data from the $(n-1)^{th}$ radio frequency unit.

In this embodiment, the $1^{st}$ radio frequency unit may be connected to the baseband unit. Because the sending apparatus includes the N radio frequency units connected in series, the first baseband data may be sequentially transmitted from the baseband unit to each radio frequency unit through a serial link. This can reduce complexity of an entire beamforming system or apparatus, optimize a topology structure, and reduce a quantity of ports of the baseband unit. In addition, amplitude-phase weighting calculation originally performed by the baseband unit is distributed to the radio frequency units, and pressure of the baseband unit is also reduced.

When each radio frequency unit performs amplitude-phase weighting, a delay caused by a serial connection is considered, so that radio frequency data converted from same baseband data can be sent out approximately at the same time.

With reference to the first aspect, in some implementations of the first aspect, the reference radio frequency unit is the $N^{th}$ radio frequency unit. When $1 \leq n \leq N-1$, the $n^{th}$ radio frequency unit is further configured to: measure an $n^{th}$ relative delay, where the $n^{th}$ relative delay indicates a delay of data transmission between the $n^{th}$ radio frequency unit and an $(n+1)^{th}$ radio frequency unit; and determine the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

In this embodiment, each radio frequency unit measures relative delays with neighboring radio frequency units, and then accumulates the relative delays through the serial link to obtain a delay between the radio frequency unit and the reference radio frequency unit. According to the measurement and calculation solution, the delay between the radio frequency unit and the reference radio frequency unit can be conveniently obtained.

With reference to the first aspect, in some implementations of the first aspect, the $n^{th}$ radio frequency unit is further configured to: obtain beam information, where the beam information indicates pitch angles and azimuth angles of K transmit beams, K is an integer, and $K \geq 1$; determine, based on the beam information and positions of M antennas of the $n^{th}$ radio frequency unit in an antenna array of the sending apparatus, amplitude weights and phase weights of M radio frequency channels of the $n^{th}$ radio frequency unit corresponding to each of the K transmit beams, where the M antennas are in a one-to-one correspondence with the M radio frequency channels, M is an integer, and $M \geq 1$; and perform the amplitude-phase weighting operation based on the amplitude weights and the phase weights.

In this embodiment, the beam information may be sequentially transmitted to each radio frequency unit through the serial link, or may be directly broadcast to each radio frequency unit by the baseband unit in a bus form. Each radio frequency unit independently determines amplitude weights and phase weights used for amplitude-phase weighting, so that pressure of the baseband unit can be greatly reduced. In addition, even if the beam information is directly transmitted by the baseband unit to each radio frequency unit, because a bandwidth occupied by the beam information is very low, a total quantity of ports or a bandwidth requirement is not significantly increased.

With reference to the first aspect, in some implementations of the first aspect, the $n^{th}$ radio frequency unit is further configured to: measure amplitude weight offset values and phase weight offset values of the M radio frequency channels corresponding to each of the K transmit beams; determine, based on the beam information and the positions of the M antennas of the $n^{th}$ radio frequency unit in the antenna array of the sending apparatus, theoretical amplitude weights and theoretical phase weights of the M radio frequency channels corresponding to each of the K transmit beams; determine the amplitude weights based on the theoretical amplitude weights and the amplitude weight offset values; and determine the phase weights based on the theoretical phase weights and the phase weight offset values.

In this embodiment, each radio frequency unit further measures amplitude weight offset values and phase weight offset values, to correct an error caused by factors such as processing or manufacturing, so that amplitude weights and phase weights are determined more accurately.

With reference to the first aspect, in some implementations of the first aspect, the $n^{th}$ radio frequency unit includes an $n^{th}$ digital front end module and an $n^{th}$ antenna module. The $n^{th}$ digital front end module is configured to: obtain the $n^{th}$ delay; obtain the first baseband data from the baseband unit or the $(n-1)^{th}$ radio frequency unit; and perform the amplitude-phase weighting operation based on the $n^{th}$ delay. The $n^{th}$ antenna module is configured to transmit the first radio frequency data.

A digital front end module is configured to perform an operation in a digital domain, and an antenna module is configured to perform an operation in an analog domain.

With reference to the first aspect, in some implementations of the first aspect, the $n^{th}$ antenna module includes a digital-to-analog converter DAC, where the DAC is configured to: obtain first processed data from the $n^{th}$ digital front end module, and perform digital-to-analog conversion on the first processed data, and the first processed data is data obtained by processing the first baseband data through the $n^{th}$ digital front end module.

With reference to the first aspect, in some implementations of the first aspect, the $n^{th}$ delay is used to adjust time for performing digital-to-analog conversion on the first processed data.

Optionally, the $n^{th}$ delay may also be used to adjust time for performing each processing process on the first baseband data by radio frequency units at all levels, for example, adjust time for performing amplitude-phase weighting, so that the radio frequency units at all levels transmit the first radio frequency data at approximately the same moment (for example, a difference between transmit moments is less than a threshold), thereby improving a beamforming effect.

The $n^{th}$ delay between the $n^{th}$ radio frequency unit and the reference radio frequency unit may be used to adjust time for first communication apparatus can be converted approximately at the same time into first radio frequency signals for sending.

With reference to the first aspect, in some implementations of the first aspect, data before and after the $n^{th}$ radio frequency unit performs the amplitude-phase weighting operation satisfies the following formula:

$$D_m = p \times \sum_{k=1}^{K} E_k \times A_{mk} e^{j\theta_{mk}}$$

Herein, p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of transmit beams, and j is an imaginary number symbol.

According to a second aspect, a receiving apparatus is provided. The receiving apparatus includes N radio frequency units connected in series. The N radio frequency units connected in series include a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$. The $n^{th}$ radio frequency unit is configured to: obtain an $n^{th}$ delay, where the $n^{th}$ delay indicates a delay of data transmission between the $n^{th}$ radio frequency unit and a reference radio frequency unit in the N radio frequency units; receive second radio frequency data, and perform a second operation on the second radio frequency data to obtain $n^{th}$ beamforming data, where the second operation includes an amplitude-phase weighting operation; and send $n^{th}$ serial beamforming data to an (n-1)$^{th}$ radio frequency unit or a baseband unit based on the n$^{th}$ delay and the n$^{th}$ beamforming data, where the n$^{th}$ serial beamforming data is a sum of N$^{th}$ beamforming data to the n$^{th}$ beamforming data. When n=1, the n$^{th}$ radio frequency unit is configured to send the n$^{th}$ serial beamforming data to the baseband unit; or when 1<n≤N, the n$^{th}$ radio frequency unit is configured to send the n$^{th}$ serial beamforming data to the (n-1)$^{th}$ radio frequency unit.

In this embodiment, each radio frequency unit receives a same first radio frequency signal, and finally converts the first radio frequency signal into a digital signal through a series of operations such as filtering and frequency conversion for processing. When the digital signal is processed in a digital domain, each radio frequency unit performs amplitude-phase weighting on the signal, to obtain a corresponding piece of beamforming data. The 1$^{st}$ radio frequency unit may be connected to the baseband unit. Because the N radio frequency units are connected in series, pieces of beamforming data obtained through calculation by the radio frequency units may be sequentially accumulated from the N$^{th}$ radio frequency unit through a serial link, to finally obtain serial beamforming data corresponding to different beams. The accumulated serial beamforming data transmitted between the radio frequency units requires a low bandwidth for data transmission. In addition, the radio frequency units perform amplitude-phase weighting and serial beamforming data generation. Therefore, amplitude-phase weighting calculation originally performed by the baseband unit is distributed to the radio frequency units, and the pressure of the baseband unit is also reduced. When baseband data obtained through radio frequency data processing is transmitted between the baseband unit and a radio frequency unit, only one baseband data bandwidth (for transmitting 1$^{st}$ serial beamforming data) is required, and the baseband unit may be configured with a small quantity of ports.

When the radio frequency units perform amplitude-phase weighting, a delay caused by a serial connection is considered, so that the pieces of beamforming data (the n$^{th}$ beamforming data) converted from the same first radio frequency data are combined.

With reference to the second aspect, in some implementations of the second aspect, the reference radio frequency unit is the N$^{th}$ radio frequency unit. When 1≤n≤N-1, the n$^{th}$ radio frequency unit is further configured to: measure an n$^{th}$ relative delay, where the n$^{th}$ relative delay indicates a delay of data transmission between the n$^{th}$ radio frequency unit and an (n+1)$^{th}$ radio frequency unit; and determine the n$^{th}$ delay based on an (n+1)$^{th}$ delay obtained from the (n+1)$^{th}$ radio frequency unit and the n$^{th}$ relative delay, where the (n+1)$^{th}$ delay is a sum of an N$^{th}$ relative delay to an (n+1)$^{th}$ relative delay, and the N$^{th}$ relative delay is 0.

With reference to the second aspect, in some implementations of the second aspect, the n$^{th}$ radio frequency unit is further configured to: obtain beam information, where the beam information indicates pitch angles and azimuth angles of K receive beams, K is an integer, and K≥1; determine, based on the beam information and positions of M antennas of the n$^{th}$ radio frequency unit in an antenna array of the receiving apparatus, amplitude weights and phase weights of M radio frequency channels of the n$^{th}$ radio frequency unit corresponding to each of the K receive beams, where the M antennas are in a one-to-one correspondence with the M radio frequency channels, M is an integer, and M≥1; and perform the amplitude-phase weighting operation based on the amplitude weights and the phase weights.

With reference to the second aspect, in some implementations of the second aspect, the n$^{th}$ radio frequency unit is further configured to: measure amplitude weight offset values and phase weight offset values of the M radio frequency channels corresponding to each of the K receive beams; determine, based on the beam information and the positions of the M antennas of the n$^{th}$ radio frequency unit in the antenna array of the receiving apparatus, theoretical amplitude weights and theoretical phase weights of the M radio frequency channels corresponding to each of the K receive beams; determine the amplitude weights based on the theoretical amplitude weights and the amplitude weight offset values; and determine the phase weights based on the theoretical phase weights and the phase weight offset values.

With reference to the second aspect, in some implementations of the second aspect, the n$^{th}$ radio frequency unit includes an n$^{th}$ digital front end module and an n$^{th}$ antenna module. The n$^{th}$ antenna module is configured to receive the second radio frequency data. The n digital front end module is configured to: obtain the n$^{th}$ delay; perform the amplitude-phase weighting operation; and send the n$^{th}$ serial beamforming data to the (n-1)$^{th}$ radio frequency unit or the baseband unit based on the n$^{th}$ delay and the n$^{th}$ beamforming data.

With reference to the second aspect, in some implementations of the second aspect, the n$^{th}$ radio frequency unit is further configured to generate the n$^{th}$ serial beamforming data, where the n$^{th}$ delay is used to adjust time for generating the n$^{th}$ serial beamforming data.

For example, time for generating serial beamforming data may be adjusted by adjusting time for analog-to-digital conversion, time for amplitude-phase weighting, or the like, thereby improving a beamforming effect in the digital domain.

With reference to the second aspect, in some implementations of the second aspect, data before and after the n$^{th}$ radio frequency unit performs the amplitude-phase weighting operation satisfies the following formula:

$$E_{mk} = S_m \times \sum_{k=1}^{K} A_{mk} e^{j\theta_{mk}}$$

$$DBF\_1st_{nk} = \sum_{m=1}^{M} E_{mk}$$

Herein, $S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol.

With reference to the second aspect, in some implementations of the second aspect, the $1^{st}$ serial beamforming data $SCDBF_{1k}$ satisfies the following formula:

$$SCDBF_{1k} = \sum_{n=1}^{N} DBF\_1st_{nk}$$

According to a third aspect, a sending method is provided, where the sending method is applied to a sending apparatus. The sending apparatus includes N radio frequency units connected in series. The N radio frequency units connected in series include a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \le n \le N$. The method includes: The $n^{th}$ radio frequency unit obtains an $n^{th}$ delay, where the $n^{th}$ delay indicates a delay of data transmission between the $n^{th}$ radio frequency unit and a reference radio frequency unit in the N radio frequency units. The $n^{th}$ radio frequency unit obtains first baseband data from a baseband unit or an $(n-1)^{th}$ radio frequency unit. The $n^{th}$ radio frequency unit performs a first operation on the first baseband data based on the $n^{th}$ delay to obtain first radio frequency data, and transmits the first radio frequency data, where the first operation includes an amplitude-phase weighting operation. When n=1, the $n^{th}$ radio frequency unit obtains the first baseband data from the baseband unit; or when $1 < n \le N$, the $n^{th}$ radio frequency unit obtains the first baseband data from the $(n-1)^{th}$ radio frequency unit.

With reference to the third aspect, in some implementations of the third aspect, the reference radio frequency unit is the $N^{th}$ radio frequency unit. When $1 \le n \le N-1$, that the $n^{th}$ radio frequency unit obtains the $n^{th}$ delay includes: The $n^{th}$ radio frequency unit measures an $n^{th}$ relative delay, where the $n^{th}$ relative delay indicates a delay of data transmission between the $n^{th}$ radio frequency unit and an $(n+1)^{th}$ radio frequency unit. The $n^{th}$ radio frequency unit determines the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

With reference to the third aspect, in some implementations of the third aspect, the method further includes: The $n^{th}$ radio frequency unit obtains beam information, where the beam information indicates pitch angles and azimuth angles of K transmit beams, K is an integer, and $K \ge 1$. The $n^{th}$ radio frequency unit determines, based on the beam information and positions of M antennas of the $n^{th}$ radio frequency unit in an antenna array of the sending apparatus, amplitude weights and phase weights of M radio frequency channels of the $n^{th}$ radio frequency unit corresponding to each of the K transmit beams, where the M antennas are in a one-to-one correspondence with the M radio frequency channels, M is an integer, and $M \ge 1$. That the $n^{th}$ radio frequency unit performs the amplitude-phase weighting operation includes: The $n^{th}$ radio frequency unit performs the amplitude-phase weighting operation based on the amplitude weights and the phase weights.

With reference to the third aspect, in some implementations of the third aspect, the method further includes: The $n^{th}$ radio frequency unit measures amplitude weight offset values and phase weight offset values of the M radio frequency channels corresponding to each of the K transmit beams. That the $n^{th}$ radio frequency unit determines, based on the beam information and the positions of the M antennas of the $n^{th}$ radio frequency unit in the antenna array of the sending apparatus, the amplitude weights and the phase weights of the M radio frequency channels of the $n^{th}$ radio frequency unit corresponding to each of the K transmit beams includes: The $n^{th}$ radio frequency unit determines, based on the beam information and the positions of the M antennas of the $n^{th}$ radio frequency unit in the antenna array of the sending apparatus, theoretical amplitude weights and theoretical phase weights of the M radio frequency channels corresponding to each of the K transmit beams. The $n^{th}$ radio frequency unit determines the amplitude weights based on the theoretical amplitude weights and the amplitude weight offset values. The $n^{th}$ radio frequency unit determines the phase weights based on the theoretical phase weights and the phase weight offset values.

With reference to the third aspect, in some implementations of the third aspect, the $n^{th}$ radio frequency unit includes an $n^{th}$ digital front end module and an $n^{th}$ antenna module. The $n^{th}$ digital front end module obtains the $n^{th}$ delay. The $n^{th}$ digital front end module obtains the first baseband data from the baseband unit or the $(n-1)^{th}$ radio frequency unit. The $n^{th}$ digital front end module performs the amplitude-phase weighting operation based on the $n^{th}$ delay. The $n^{th}$ antenna module transmits the first radio frequency data.

With reference to the third aspect, in some implementations of the third aspect, the $n^{th}$ antenna module includes a digital-to-analog converter DAC. The method further includes: The DAC obtains first processed data from the $n^{th}$ digital front end module. The DAC performs digital-to-analog conversion on the first processed data. The first processed data is data obtained by processing the first baseband data through the $n^{th}$ digital front end module.

With reference to the third aspect, in some implementations of the third aspect, the $n^{th}$ delay is used to adjust time for performing digital-to-analog conversion on the first processed data.

With reference to the third aspect, in some implementations of the third aspect, data before and after the $n^{th}$ radio frequency unit performs the amplitude-phase weighting operation satisfies the following formula:

$$D_m = p \times \sum_{k=1}^{K} E_k \times A_{mk} e^{j\theta_{mk}}$$

Herein, p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of transmit beams, and j is an imaginary number symbol.

According to a fourth aspect, a receiving method is provided, where the receiving method is applied to a receiving apparatus. The receiving apparatus includes N radio frequency units connected in series. The N radio frequency units connected in series include a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$. The method includes: The $n^{th}$ radio frequency unit obtains an $n^{th}$ delay, where the $n^{th}$ delay indicates a delay of data transmission between the $n^{th}$ radio frequency unit and a reference radio frequency unit in the N radio frequency units. The $n^{th}$ radio frequency unit receives second radio frequency data, and performs a second operation on the second radio frequency data to obtain $n^{th}$ beamforming data, where the second operation includes an amplitude-phase weighting operation. The $n^{th}$ radio frequency unit sends $n^{th}$ serial beamforming data to an $(n-1)^{th}$ radio frequency unit or a baseband unit based on the $n^{th}$ delay and the $n^{th}$ beamforming data, where the $n^{th}$ serial beamforming data is a sum of $N^{th}$ beamforming data to the $n^{th}$ beamforming data. When n=1, the $n^{th}$ radio frequency unit sends the $n^{th}$ serial beamforming data to the baseband unit; or when $1 < n \leq N$, the $n^{th}$ radio frequency unit sends the $n^{th}$ serial beamforming data to the $(n-1)^{th}$ radio frequency unit.

With reference to the fourth aspect, in some implementations of the fourth aspect, the reference radio frequency unit is the $N^{th}$ radio frequency unit. When $1 \leq n \leq N-1$, that the $n^{th}$ radio frequency unit obtains the $n^{th}$ delay includes: The $n^{th}$ radio frequency unit measures an $n^{th}$ relative delay, where the $n^{th}$ relative delay indicates a delay of data transmission between the $n^{th}$ radio frequency unit and an $(n+1)^{th}$ radio frequency unit. The $n^{th}$ radio frequency unit determines the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

With reference to the fourth aspect, in some implementations of the fourth aspect, the method further includes: The $n^{th}$ radio frequency unit obtains beam information, where the beam information indicates pitch angles and azimuth angles of K receive beams, K is an integer, and $K \geq 1$. The $n^{th}$ radio frequency unit determines, based on the beam information and positions of M antennas of the $n^{th}$ radio frequency unit in an antenna array of the receiving apparatus, amplitude weights and phase weights of M radio frequency channels of the $n^{th}$ radio frequency unit corresponding to each of the K receive beams, where the M antennas are in a one-to-one correspondence with the M radio frequency channels, M is an integer, and $M \geq 1$. That the $n^{th}$ radio frequency unit performs the amplitude-phase weighting operation includes: The $n^{th}$ radio frequency unit performs the amplitude-phase weighting operation based on the amplitude weights and the phase weights.

With reference to the fourth aspect, in some implementations of the fourth aspect, the method further includes: The $n^{th}$ radio frequency unit measures amplitude weight offset values and phase weight offset values of the M radio frequency channels corresponding to each of the K receive beams. That the $n^{th}$ radio frequency unit determines, based on the beam information and the positions of the M antennas of the $n^{th}$ radio frequency unit in the antenna array of the receiving apparatus, the amplitude weights and the phase weights of the M radio frequency channels of the $n^{th}$ radio frequency unit corresponding to each of the K receive beams includes: The $n^{th}$ radio frequency unit determines, based on the beam information and the positions of the M antennas of the $n^{th}$ radio frequency unit in the antenna array of the receiving apparatus, theoretical amplitude weights and theoretical phase weights of the M radio frequency channels corresponding to each of the K receive beams. The $n^{th}$ radio frequency unit determines the amplitude weights based on the theoretical amplitude weights and the amplitude weight offset values. The $n^{th}$ radio frequency unit determines the phase weights based on the theoretical phase weights and the phase weight offset values.

With reference to the fourth aspect, in some implementations of the fourth aspect, the $n^{th}$ radio frequency unit includes an $n^{th}$ digital front end module and an $n^{th}$ antenna module. The $n^{th}$ antenna module receives the second radio frequency data. The n digital front end module obtains the $n^{th}$ delay. The n digital front end module performs the amplitude-phase weighting operation. The n digital front end module sends the $n^{th}$ serial beamforming data to the $(n-1)^{th}$ radio frequency unit or the baseband unit based on the $n^{th}$ delay and the $n^{th}$

beamforming data.

With reference to the fourth aspect, in some implementations of the fourth aspect, the method further includes: The $n^{th}$ digital front end module generates the $n^{th}$ serial beamforming data, where the $n^{th}$ delay is used to adjust time for generating the $n^{th}$ serial beamforming data.

With reference to the fourth aspect, in some implementations of the fourth aspect, data before and after the $n^{th}$ radio frequency unit performs the amplitude-phase weighting operation satisfies the following formula:

$$E_{mk} = S_m \times \sum_{k=1}^{K} A_{mk} e^{j\theta_{mk}}$$

$$DBF\_1st_{nk} = \sum_{m=1}^{M} E_{mk}$$

Herein, $S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol.

With reference to the fourth aspect, in some implementations of the fourth aspect, a $1^{st}$ serial beamforming data satisfies the following formula:

$$SCDBF_{1k} = \sum_{n=1}^{N} DBF\_1st_{nk}$$

According to a fifth aspect, a sending system is provided, including a baseband unit and the sending apparatus according to any one of the first aspect or the implementations of the first aspect, where the baseband unit is connected to a $1^{st}$ radio frequency unit.

According to a sixth aspect, a receiving system is provided, including a baseband unit and the receiving apparatus according to any one of the second aspect or the implementations of the second aspect, where the baseband unit is connected to a $1^{st}$ radio frequency unit.

According to a seventh aspect, a communication apparatus is provided, including a processor. The processor is coupled to a memory, and the processor is configured to invoke computer program instructions stored in the memory, to perform the method according to any one of the third aspect or the implementations of the third aspect and/or the fourth aspect or the implementations of the fourth aspect.

According to an eighth aspect, a chip is provided, including a processor and a communication interface. The communication interface is configured to receive data and/or information, and transmit the received data and/or information to the processor. The processor processes the data and/or information, to perform the method according to any one of the third aspect or the implementations of the third aspect and/or the fourth aspect or the implementations of the fourth aspect.

According to a ninth aspect, a computer-readable storage medium is provided. The computer-readable storage medium stores instructions. When the instructions are run on a computer, the computer is enabled to perform the method according to any one of the third aspect or the implementations of the third aspect and/or the fourth aspect or the implementations of the fourth aspect.

According to a tenth aspect, a computer program product is provided. The computer-readable storage medium stores instructions. When the instructions are run on a computer, the computer is enabled to perform the method according to any one of the third aspect or the implementations of the third aspect and/or the fourth aspect or the implementations of the fourth aspect.

According to an eleventh aspect, a communication system is provided, including a network device and/or a terminal device, where the network device and/or the terminal device is configured to perform the method according to any one of the third aspect or the implementations of the third aspect or the fourth aspect and/or the implementations of the fourth aspect.

## BRIEF DESCRIPTION OF DRAWINGS

FIG. 1 is a communication system to which an embodiment of this application is applicable;
FIG. 2 is a diagram of a structure of a digital phased array;
FIG. 3 is a transceiver apparatus according to an embodiment of this application;
FIG. 4 is a transceiver apparatus according to an embodiment of this application;
FIG. 5 is a block diagram of a radio frequency unit according to an embodiment of this application; and
FIG. 6 is a block diagram of a communication apparatus according to an embodiment of this application.

## DESCRIPTION OF EMBODIMENTS

The following describes technical solutions of this application with reference to accompanying drawings.

The technical solutions of this application may be applied to a non-terrestrial network (non-terrestrial network, NTN) system like a satellite communication system, a high altitude platform station (high altitude platform station, HAPS) communication system, or an uncrewed aerial vehicle, or may be applied to a terrestrial microwave communication system, a radar communication system, or the like. The NTN system is used as an example, and the technical solutions of this application may be applied to, for example, an integrated communication and navigation (integrated communication and navigation, IcaN) system, a global navigation satellite system (global navigation satellite system, GNSS), and an ultra-dense low-orbit satellite communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future 6th generation (6th generation, 6G) communication system, another mobile communication system, or the like.

The satellite communication system includes user equipment (UE) and a network device. The user equipment may also be referred to as a user terminal, a mobile station, or the like. The network device may include one or more satellites and one or more terrestrial station devices. The terrestrial station device may also be referred to as a core network device. The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for a terminal device by using a plurality of beams. The satellite uses the plurality of beams to cover a service area, and different beams may be used to perform communication in one or more manners of time division, frequency division, and space division. The satellite performs wireless communication with the terminal device by broadcasting a communication signal, a navigation signal, and the like. The satellite may perform wireless communication with a terrestrial station device. The satellite mentioned in embodiments of this application may be a satellite base station, may include an orbit receiver or a repeater configured to relay information, or may be a network side device mounted on a satellite.

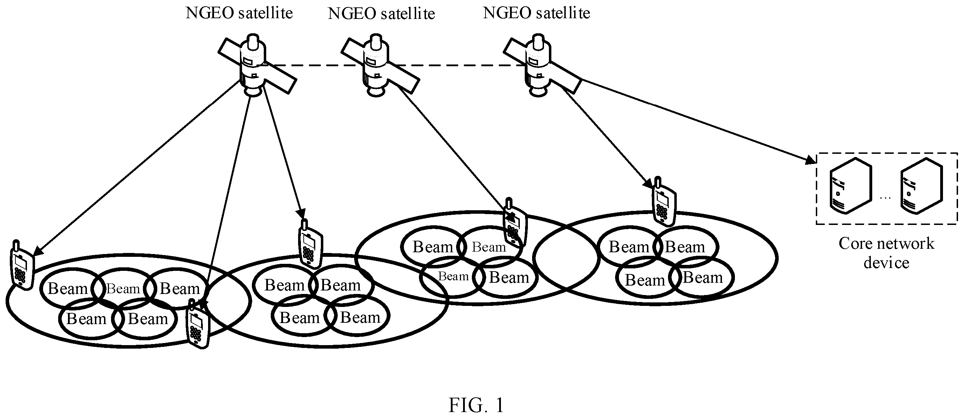

An NTN system is used as an example. FIG. 1 is a diagram of a communication system 100 to which an embodiment of this application is applicable. As shown in FIG. 1, a satellite provides a communication service for a terminal device by using a plurality of beams. The satellite in this scenario is a non-geostationary earth orbit (non-geostationary earth orbit, NGEO) satellite, and the satellite is connected to a core network device. The satellite uses the plurality of beams to cover a service area, and different beams may be used to perform communication in one or more manners of time division, frequency division, and space division. The satellite provides communication and navigation services for the terminal device by using a broadcast communication signal and a navigation signal. The satellite mentioned in embodiments of this application may alternatively be a satellite base station or a network side device mounted on a satellite.

The terminal device mentioned in embodiments of this application includes various handheld devices, vehicle-mounted devices, wearable devices, or compute devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

A terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include network elements such as an access and mobility management network element (Access and Mobility Management Function, AMF), a session management network element (Session Management Function, SMF), an authentication server network element (Authentication Server Function, AUSF), a policy control node (Policy control Function, PCF), and a user plane function (User Plane Function, UPF) network element. The AMF network element is configured to manage access and mobility of the UE, and is mainly responsible for functions such as UE authentication, UE mobility management, and UE paging.

Alternatively, the network device may include but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the network device may be a gNB, a TRP, or a TP in a 5G system, or one antenna panel or one group of antenna panels (including a plurality of antenna panels) of a base station in a 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

A phased array antenna is a core component of a network device and user equipment in a communication system, and is widely used in various communication systems such as a satellite communication system and a radar communication system. Beamforming is a core technology of phased array antennas. In a digital beamforming technology, a ratio of a quantity of beams to a quantity of antenna units may be flexibly adjusted as required, implementing free switching between a multi-beam scenario and a high-gain scenario.

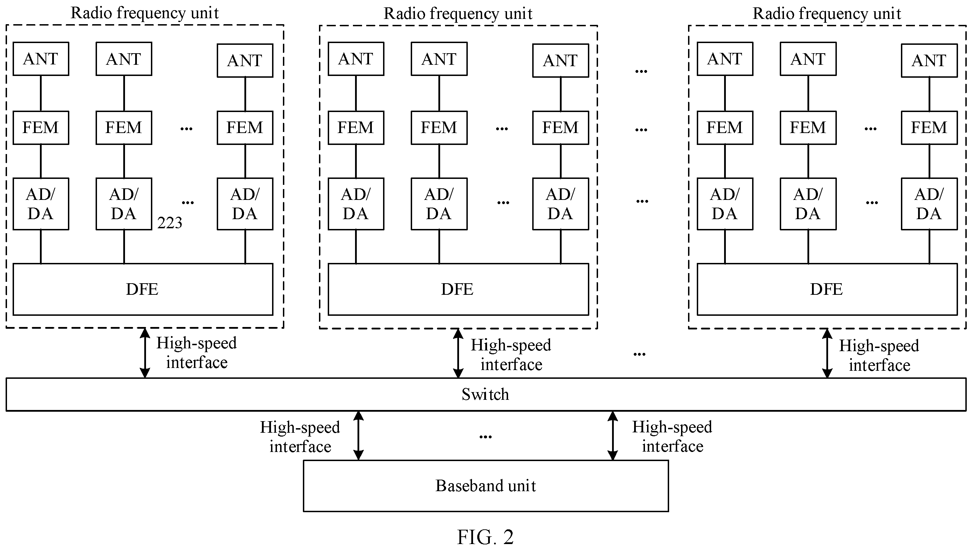

FIG. 2 is a diagram of a structure of a digital phased array antenna. As shown in FIG. 2, a digital phased array uses a star topology structure, and includes a baseband unit and a plurality of radio frequency units. Each radio frequency unit includes a digital front end (digital front end, DFE) and a plurality of radio frequency channels, and each radio frequency channel includes an antenna (antenna, ANT), a radio frequency front end module (front end module, FEM), and an analog-to-digital/digital-to-analog (analog-to-digital/digital-to-analog, AD/DA) conversion unit. The radio frequency unit and the baseband unit are connected to each other through a high-speed interface. If the digital phased array is large and there are a large quantity of radio frequency units, switches are added between the radio frequency units and the baseband unit to implement port extension and data switching.

However, as a scale of the digital phased array antenna increases, a quantity of cables of the entire digital phased array antenna and system complexity are greatly increased, and a quantity of ports of the baseband unit and a required bandwidth are also greatly increased.

Embodiments of this application provide a transceiver apparatus, to simplify a topology structure of a beamforming-related apparatus or system, and reduce quantities of cables and ports.

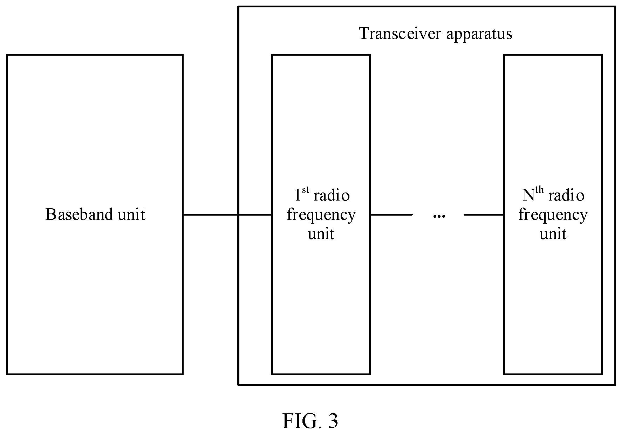

As shown in FIG. 3, the transceiver apparatus includes N radio frequency units connected in series (a 1st radio frequency unit to an Nth radio frequency unit, where N is a positive integer). A 2nd radio frequency unit is connected to the 1st radio frequency unit, a 3rd radio frequency unit is connected to the 2nd radio frequency unit, ..., and the Nth radio frequency unit is connected to an (N-1)th radio frequency unit. The transceiver apparatus is used in a transceiver system, where the transceiver system includes the transceiver apparatus and a baseband unit, and the baseband unit is connected to the 1st radio frequency unit.

When the transceiver apparatus is used as a sending apparatus, any radio frequency unit, namely, an nth radio frequency unit ($1 \leq n \leq N$), of the N radio frequency units may obtain first baseband data from the baseband unit or an (n-1)th radio frequency unit, perform a first operation on the first baseband data to obtain first radio frequency data, and transmit the first radio frequency data. In addition, an amplitude-phase weighting operation may be completed by each radio frequency unit, to perform beamforming on the first baseband data and transmit the first radio frequency data.

Specifically, when n is 1, the 1st radio frequency unit obtains the first baseband data from the baseband unit; or when $1 < n \leq N$, the nth radio frequency unit obtains the first baseband data from the (n-1)th radio frequency unit. Therefore, the first baseband data may be sequentially transmitted from the 1st radio frequency unit to the Nth radio frequency unit by the N radio frequency units connected in series, and different radio frequency units obtain same first baseband data.

Because positions of the N radio frequency units are different, the different radio frequency units receive the first baseband data at different time. The 1st radio frequency unit receives the first baseband data earliest, and the Nth radio frequency unit receives the first baseband data latest. To reduce impact of receiving delays of the different radio frequency units on a beamforming effect, the nth radio frequency unit obtains an nth delay, where the nth delay indicates a delay of data transmission between the nth radio frequency unit and a reference radio frequency unit in the N radio frequency units, and performs the first operation on the first baseband data based on the nth delay, to obtain the first radio frequency data.

The first baseband data may be transmitted between radio frequency units or between the baseband unit and the 1st radio frequency unit in a form of a data stream, and only data of one sampling point is transmitted each time; or the first baseband data may be transmitted in a form of a data packet, and a segment of data is sent each time. In comparison with a case in which a baseband unit in a star topology sends different baseband data to different radio frequency units, because the same first baseband data is sequentially transmitted from the 1st radio frequency unit to the Nth radio frequency unit, a channel bandwidth required between the baseband unit and the radio frequency unit can be greatly reduced, and is unrelated to a quantity of radio frequency units. In addition, a quantity of ports in the transceiver system can also be reduced, and data processing overheads of the baseband unit can be distributed on the different radio frequency units.

In addition, because a delay between the radio frequency units is considered when the different radio frequency units process the received first baseband data, the baseband data with the same content may be processed at approximately the same moment based on the delay, and finally, the radio frequency data with the same content may be sent at approximately the same moment through antennas, thereby improving the beamforming effect.

That the $n^{th}$ radio frequency unit performs amplitude-phase weighting on the first baseband data may also be referred to as that the $n^{th}$ radio frequency unit performs beamforming on the first baseband data, that the first baseband data is mapped to different radio frequency channels, or the like.

Specifically, the first baseband data may be baseband data corresponding to one transmit beam, or may be baseband data corresponding to a plurality of transmit beams. It is assumed that a quantity of transmit beams is K, and a quantity of radio frequency channels of the $n^{th}$ radio frequency unit is M. In this case, during amplitude-phase weighting, the $n^{th}$ radio frequency unit may convert the baseband data corresponding to the K transmit beams into data corresponding to the M radio frequency channels. Data before and after amplitude-phase weighting is performed may satisfy the following formula:

$$D_m = p \times \sum_{k=1}^{K} E_k \times A_{mk} e^{j\theta_{mk}}$$

Herein, p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight that correspond to the $k^{th}$ beam and the $m^{th}$ channel, k is a positive integer between 1 and K, m is a positive integer between 1 and M, and j is an imaginary number symbol.

When the quantity K of beams is 1, the foregoing formula is changed to:

$$D_m = p \times E \times A_m e^{j\theta_m}$$

Herein, E is data before amplitude-phase weighting is performed, and $A_m$ and $\theta_m$ are respectively an amplitude weight and a phase weight that correspond to the $m^{th}$ channel.

To perform amplitude-phase weighting, the $n^{th}$ radio frequency unit needs to obtain the amplitude weight $A_{mk}$ and the phase weight $\theta_{mk}$.

In embodiments of this application, the $n^{th}$ radio frequency unit may obtain beam information, and determine, based on the beam information and positions of M antennas of the $n^{th}$ radio frequency unit in antennas of the entire transceiver apparatus, amplitude weights and phase weights of all radio frequency channels of the $n^{th}$ radio frequency unit corresponding to each beam.

The beam information may include pitch angles and azimuth angles of the K beams, or may include beam position numbers of the K beams. There is a correspondence between a beam position number and a pitch angle and an azimuth angle of a beam. Therefore, when obtaining a beam position number based on the beam information, the $n^{th}$ radio frequency unit may determine a pitch angle and an azimuth angle of a corresponding beam.

The beam information may be sequentially transmitted by the baseband unit through the radio frequency units connected in series, so that the beam information may be sequentially transmitted from the $1^{st}$ radio frequency unit to the $N^{th}$ radio frequency unit. Alternatively, the beam information may be transmitted by the baseband unit to the $1^{st}$ radio frequency unit to the $N^{th}$ radio frequency unit directly in a bus broadcast manner. In this case, there may be a port or channel for transmitting the beam information between the baseband unit and the N radio frequency units connected in series. Because few resources are consumed for transmitting the beam information, a bandwidth required by the port for transmitting the beam information between the baseband unit and the N radio frequency units is not high.

The baseband unit may send the beam information regularly, for example, periodically.

The antennas of the entire transceiver apparatus may be arranged in an array manner. Positions of the M antennas of the $n^{th}$ radio frequency unit in the antenna array may be represented by coordinates of the M antennas. For example, when the antenna array is arranged in a rectangular manner, the positions of the M antennas may be represented by using an array (a, b), where a and b are respectively row sequence numbers and column sequence numbers of the antennas. For another example, when the antennas are arranged in a linear manner, the positions of the M antennas may be represented by using a sequence number c.

The M antennas of the $n^{th}$ radio frequency unit correspond to the M radio frequency channels of the $n^{th}$ radio frequency unit. It should be understood that the M antennas may be M independent antenna radiators, or may be M antenna subarrays. It should be further understood that, quantities of antennas and quantities of radio frequency channels corresponding to different radio frequency units may be different or may be the same.

The $n^{th}$ radio frequency unit can determine amplitude weights and phase weights of radio frequency channels corresponding to each beam, and that the K transmit beams correspond to the M radio frequency channels may be used to determine K*M amplitude weights and K*M phase weights. For example, for the $k^{th}$ beam (beam #k) in the K beams, the $k^{th}$ beam corresponds to the $m^{th}$ channel with an amplitude weight $A_{mk}$ and a phase weight $\theta_{mk}$, where $1 \leq m \leq M$, and $1 \leq k \leq K$.

In some embodiments, the amplitude weights and the phase weights may be directly determined by the $n^{th}$ radio frequency unit based on the positions of the M antennas in the antenna array and the beam information. In this way, the amplitude weights and the phase weights may be system parameters or preset values, and may be values that are pre-determined or written into system parameters before the first baseband data is processed. Alternatively, the amplitude weights and the phase weights may be determined in a process of processing the first baseband data. In this case, the amplitude weights and the phase weights are equivalent to theoretical amplitude weights and theoretical phase weights described below.

In some other embodiments, to improve accuracy of the amplitude weights and the phase weights, the $n^{th}$ radio frequency unit may determine theoretical amplitude weights and theoretical phase weights based on the positions of the M antennas in the antenna array and the beam information, and then measure amplitude weight offset values and phase weight offset values corresponding to different beams and different radio frequency channels. The amplitude weight offset values and the phase weight offset values may be generated due to factors such as a design processing error and a use loss of the antennas. The amplitude weights may be determined based on the theoretical amplitude weights and the amplitude weight offset values, and the phase weights may be determined based on the theoretical phase weights and the phase weight offset values. Then, the amplitude weights and the phase weights are used for amplitude-phase weighting.

For example, the amplitude weight may be a sum of a theoretical amplitude weight and an amplitude weight offset value, and the phase weight may be a sum of a theoretical phase weight and a phase weight offset value. It is assumed that a theoretical amplitude weight, a theoretical phase weight, an amplitude weight offset value, and a phase weight offset value of the $m^{th}$ channel corresponding to the $k^{th}$ beam are respectively $A_{mk0}$, $\theta_{mk0}$, $\Delta A_{mk}$, and $\Delta \theta_{mk}$. In this case, the amplitude weight $A_{mk}$ is $A_{mk0} + \Delta A_{mk}$, and the phase weight $\theta_{mk}$ is $\theta_{mk0} + \Delta \theta_{mk}$.

The $n^{th}$ delay indicates the delay of data transmission between the $n^{th}$ radio frequency unit and the reference radio frequency unit. The reference radio frequency unit may be any one of the N radio frequency units. For example, the reference radio frequency unit may be the $N^{th}$ radio frequency unit or the $1^{st}$ radio frequency unit. For example, the reference radio frequency unit is the $N^{th}$ radio frequency unit. An $N^{th}$ delay is 0, an $(N-1)^{th}$ delay is a delay of data transmission between an $(N-1)^{th}$ radio frequency unit and the $N^{th}$ radio frequency unit, an $(N-2)^{th}$ delay is a delay of data transmission between an $(N-2)^{th}$ radio frequency unit and the $N^{th}$ radio frequency unit,..., and a $1^{st}$ delay is a delay of data transmission between the $1^{st}$ radio frequency unit and the $N^{th}$ radio frequency unit.

To obtain the $n^{th}$ delay, the $n^{th}$ radio frequency unit may measure an $n^{th}$ relative delay, where the $n^{th}$ relative delay indicates a delay of data transmission between the $n^{th}$ radio frequency unit and an $(n+1)^{th}$ radio frequency unit; and determine the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

Specifically, the $N^{th}$ relative delay may be 0, and the $N^{th}$ radio frequency unit may send the $N^{th}$ relative delay to the $(N-1)^{th}$ radio frequency unit as the $N^{th}$ delay; the $(N-1)^{th}$ radio frequency unit measures the delay of data transmission between the $(N-1)^{th}$ radio frequency unit and the $N^{th}$ radio frequency unit as an $(N-1)^{th}$ relative delay, combines the $(N-1)^{th}$ relative delay and the $N^{th}$ delay (0) to obtain the $(N-1)^{th}$ delay, and sends the $(N-1)^{th}$ delay to the $(N-2)^{th}$ radio frequency unit; ...; the $1^{st}$ radio frequency unit receives a $2^{nd}$ delay from the $2^{nd}$ radio frequency unit, and the $1^{st}$ radio frequency unit measures a delay of data transmission between the $1^{st}$ radio frequency unit and the $2^{nd}$ radio frequency unit as a $1^{st}$ relative delay, and combines the $2^{nd}$ delay and the $1^{st}$ relative delay to obtain the $1^{st}$ delay.

After obtaining a corresponding delay (the $n^{th}$ delay), each radio frequency unit may wait for time corresponding to the delay after receiving the first baseband data, and then process the first baseband data. For example, a buffer depth of the first baseband data may be controlled based on the delay, and the buffer depth gradually decreases from the $1^{st}$ radio frequency unit to the $N^{th}$ radio frequency unit. Therefore, after receiving the first baseband data, the $N^{th}$ radio frequency unit may process the corresponding data without waiting, but the $1^{st}$ radio frequency unit needs to wait and does not process the first baseband data until the $N^{th}$ radio frequency unit also receives the first baseband data. The first baseband data may be first split based on a beam and then amplitude-phase weighting and other processing are performed. Alternatively, each radio frequency unit may directly perform partial processing after receiving the first baseband data, and perform subsequent processing after waiting for time whose total duration is the corresponding delay. For example, after receiving the first baseband data, each radio frequency unit may directly split the data based on a beam and perform amplitude-phase weighting. Then, a module responsible for amplitude-phase weighting may wait for the time corresponding to the delay, and then transmit the first baseband data to another module for further processing, for example, transmit the first baseband data to a digital-to-analog conversion module for digital-to-analog conversion. In this way, the different radio frequency units can send, through antennas at approximately the same moment, radio frequency data generated based on the same baseband data.

Certainly, when the $n^{th}$ delay is determined, in addition to the $N^{th}$ radio frequency unit, another radio frequency unit may be used as the reference radio frequency unit, for example, the $1^{st}$ radio frequency unit or another radio frequency unit. This is not limited in this application. The $n^{th}$ delay may alternatively be calculated by one radio frequency unit. For example, each radio frequency unit may calculate a relative delay between the radio frequency unit and an adjacent radio frequency unit, and then send the relative delay to the radio frequency unit responsible for calculation to perform calculation. After calculation is completed, the radio frequency unit sends different delays to other radio frequency units. A manner in which the $n^{th}$ radio frequency unit obtains the $n^{th}$ delay is not limited in this application.

In embodiments of this application, each radio frequency unit may include a digital front end module and an antenna module. The digital front end module may be mainly responsible for processing the first baseband data or processed data of the first baseband data in a digital domain, and the antenna module may be mainly responsible for processing the first baseband data or processed data of the first baseband data in an analog domain. The $n^{th}$ radio frequency unit may include an $n^{th}$ digital front end module and an $n^{th}$ antenna module. The $n^{th}$ digital front end module may be configured to: obtain the $n^{th}$ delay, obtain the first baseband data from the baseband unit (when n=1) or the $(n-1)^{th}$ radio frequency unit (when n≥1), and perform an amplitude-phase weighting operation based on the $n^{th}$ delay. The $n^{th}$ antenna module may transmit the first radio frequency data.

When the beam information is also transmitted in a serial manner, the $n^{th}$ digital front end module may also be responsible for serial transmission of the beam information. When a clock signal and a synchronization signal are also transmitted in a serial manner, the clock signal, the synchronization signal, and the like may also be transmitted by the $n^{th}$ digital front end module.

Because the first baseband data has a large amount of data and is transmitted in a serial manner, when the beam information or the like is transmitted in another manner, an independent submodule in the digital front end module may be responsible for transmitting the first baseband data. For example, the $n^{th}$ digital front end module may include an $n^{th}$ serial transmission submodule, and the $n^{th}$ serial transmission submodule may be configured to transmit the first baseband data to an $N^{th}$ serial transmission submodule of the $N^{th}$ radio frequency unit. The $n^{th}$ digital front end module may further include an $n^{th}$ time domain beamforming submodule, configured to calculate an amplitude weight and a phase weight, so as to perform an amplitude-phase weighting operation.

For example, after obtaining the first baseband data from a serial transmission submodule of a previous-level radio frequency unit (the $(n-1)^{th}$ radio frequency unit) or the baseband unit, the $n^{th}$ serial transmission submodule may transmit the first baseband data to a next-level radio frequency unit (the $(n+1)^{th}$ radio frequency unit), and transfer a copy of the first baseband data to the $n^{th}$ time domain beamforming submodule for amplitude-phase weighting.

In embodiments of this application, the $n^{th}$ time domain beamforming submodule may further include a correction submodule, and the correction submodule may include a baseband data buffering submodule, a delay measurement submodule, and an amplitude and phase measurement submodule. After receiving the first baseband data from the baseband unit or a previous-level radio frequency unit of a radio frequency unit, the radio frequency unit may first buffer the data to a data buffering submodule.

The delay measurement submodule may perform related processing on the $n^{th}$ delay, for example, to control, based on the $n^{th}$ delay, a depth at which the first baseband data is buffered in the baseband data buffering submodule.

The amplitude and phase measurement submodule may measure amplitude and phase differences between the transmit channels of the antennas in the system, that is, may measure the amplitude weight offset value $\Delta A_{mk}$ and the phase weight offset value $\Delta\theta_{mk}$, and may calculate the amplitude weight and the phase weight.

Certainly, the correction submodule may alternatively be an independent module, and the correction submodule, the $n^{th}$ serial transmission submodule, and the $n^{th}$ time domain beamforming submodule are three independent modules in the time domain beamforming submodule.

The $n^{th}$ antenna module may include a digital-to-analog converter (digital-to-analog converter, DAC), which is responsible for converting the first baseband data from a digital signal into an analog signal. Measurement for the $n^{th}$ delay in the foregoing descriptions may alternatively be considered as moments at which data processed by digital front ends module of the different radio frequency units is processed by DACs are the same or a difference between processing moments is less than a threshold, or moments at which digital-to-analog conversion is performed on the first baseband data of the different radio frequency units are consistent.

The $n^{th}$ antenna module may further include an FEM and an antenna. The FEM may be a module integrating at least two of a radio frequency switch, a low noise amplifier, a filter, a power divider duplexer, a power amplifier, and the like, and is configured to perform operations such as filtering, amplification, and spectrum shifting on data.

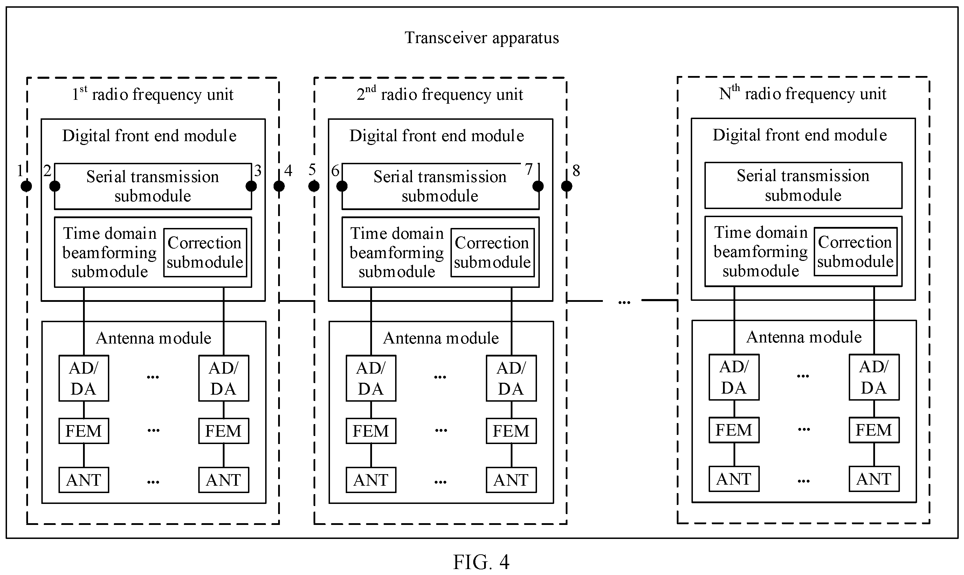

FIG. 4 is a diagram of a structure of a transceiver apparatus according to an embodiment of this application. With reference to the transceiver apparatus shown in FIG. 4, the following describes a method for measuring the $n^{th}$ relative delay.

The $1^{st}$ relative delay is used as an example. There are a plurality of moments related to processing since the first baseband data enters the $1^{st}$ radio frequency unit. A point 1 is a moment at which the first baseband data enters an input port of the $1^{st}$ radio frequency unit, a point 2 is a moment at which a serial transmission submodule of the $1^{st}$ radio frequency unit starts to process the first baseband data, a point 3 is a moment at which the serial transmission submodule of the $1^{st}$ radio frequency unit completes internal processing, and a point 4 is a moment at which the first baseband data is output from an output port of the $1^{st}$ radio frequency unit. A point 5 is a moment at which the first baseband data enters an input port of the $2^{nd}$ radio frequency unit, a point 6 is a moment at which a serial transmission submodule of the $2^{nd}$ radio frequency unit starts to process the first baseband data, a point 7 is a moment at which the serial transmission submodule of the $2^{nd}$ radio frequency unit completes internal processing, and a point 8 is a moment at which the first baseband data is output from an output port of the $2^{nd}$ radio frequency unit.

When the $1^{st}$ relative delay is measured, the $1^{st}$ radio frequency unit may send measurement data to the $2^{nd}$ radio frequency unit, the $1^{st}$ radio frequency unit and the $2^{nd}$ radio frequency unit record timestamps of the foregoing moments, and then the $1^{st}$ radio frequency unit determines the $1^{st}$ relative delay based on the timestamps.

For example, the $1^{st}$ relative delay may be represented by using a difference between a moment at which the first baseband data starts to be processed by the $1^{st}$ radio frequency unit and a moment at which the first baseband data starts to be processed by the $2^{nd}$ radio frequency unit. In other words, the $1^{st}$ relative delay delay_12=t_23+t_34+t_45+t_56+CLK_12, where t_23, t_34, t_45, and t_56 are respectively moment differences between the point 2 and the point 3, the point 3 and the point 4, the point 4 and the point 5, and the point 5 and the point 6, and CLK_12 is a local clock difference between the $1^{st}$ radio frequency unit and the $2^{nd}$ radio frequency unit.

Certainly, the $1^{st}$ relative delay may alternatively be represented by using a difference between other corresponding moments, for example, a difference between moments at which the first baseband data enters input ports of two radio frequency units. This is not limited in this application.

In addition, according to reciprocity, the $2^{nd}$ radio frequency unit may alternatively send a test signal to the $1^{st}$ radio frequency unit, and then determine the $1^{st}$ relative delay based on a difference between time nodes of the test signal.

The $n^{th}$ delay may be measured in advance, for example, obtained through calculation in advance as a preset parameter of the system. Certainly, the $n^{th}$ delay may alternatively be obtained through online testing and calculation. Alternatively, the external transmission delay t_45 between the radio frequency units may be obtained in advance as a system parameter, and an internal transmission delay of a radio frequency unit may be obtained through online calculation. This is not limited in this application.

When the transceiver apparatus is a receiving apparatus, any radio frequency unit (the $n^{th}$ radio frequency unit) in the N radio frequency units can receive second radio frequency data; perform a second operation on the second radio frequency data to obtain $n^{th}$ beamforming data, where the second operation includes an amplitude-phase weighting operation; and send $n^{th}$ serial beamforming data to the $(n-1)^{th}$ radio frequency unit (when $1<n\leq N$) or the baseband unit (when n=1) based on the $n^{th}$ beamforming data, where the $n^{th}$ serial beamforming data is a sum of $N^{th}$ beamforming data to the $n^{th}$ beamforming data. Similar to the sending case, the $n^{th}$ radio frequency unit also obtains the $n^{th}$ delay, and performs the foregoing amplitude-phase weighting operation based on the $n^{th}$ delay.

Because a delay is generated during serial beamforming data transmission between the N radio frequency units, and different radio frequency units generate serial beamforming data at different times, the radio frequency unit needs to determine time for serial combination based on the corresponding $n^{th}$ delay, to ensure that data used by the different radio frequency units for serial combination is data obtained by processing the second radio frequency data.

Different from the star topology in which the different radio frequency units transmit respective data to the baseband unit through high-speed interfaces, in this application, the baseband unit only needs to have a high-speed interface with the $1^{st}$ radio frequency unit, and a quantity of ports/interfaces and a bandwidth can be greatly reduced. In addition, overheads of amplitude-phase weighting performed by the baseband unit can be distributed to the different radio frequency units.

The data before and after the $n^{th}$ radio frequency unit performs amplitude-phase weighting may satisfy the following formula:

$$E_{mk} = S_m \times \sum_{k=1}^{K} A_{mk} e^{j\theta_{mk}}$$

$$DBF\_1st_{nk} = \sum_{m=1}^{M} E_{mk}$$

Herein, $S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol. In other words, when performing amplitude-phase weighting, the $n^{th}$ radio frequency unit may first obtain the channel beamforming data $E^{mk}$ corresponding to the $m^{th}$ channel and the $k^{th}$ beam, and then perform summation based on the channel, to obtain the $n^{th}$ beamforming data $DBF\_1st^{nk}$ corresponding to the $k^{th}$ beam. There are K pieces of $n^{th}$ beamforming data.

When K is 1, the foregoing formula is changed to:

$$E_m = S_m \times A_m e^{j\theta_m}$$

$$DBF\_1st_n = \sum_{m=1}^{M} E_m$$

Herein, $E_m$ is channel beamforming data corresponding to the $m^{th}$ channel, $DBF\_1st_n$ is the $n^{th}$ beamforming data, and $A_m$ and $\theta_m$ are respectively an amplitude weight and a phase weight corresponding to the $m^{th}$ channel.

Similarly, to obtain the foregoing amplitude weight and phase weight, the $n^{th}$ radio frequency unit may obtain the received beam information from the baseband unit through a serial link or directly, to indicate the pitch angles and the azimuth angles of the K receive beams, so that the $n^{th}$ radio frequency unit determines, based on the beam information and the positions of the M antennas of the $n^{th}$ radio frequency unit in the antenna array of the transceiver apparatus, an amplitude weight and a phase weight corresponding to each receive beam and each radio frequency channel of the $n^{th}$ radio frequency unit, and then performs the amplitude-phase weighting operation.

Further, the $n^{th}$ radio frequency unit may also measure an amplitude weight offset value and a phase weight offset value, so that the amplitude weight and the phase weight are determined more accurately.

To obtain the $n^{th}$ serial beamforming data $SCDBF_{nk}$, the $n^{th}$ radio frequency unit may combine the $n^{th}$ beamforming data $DBF\_1st_{nk}$ with an $(n+1)^{th}$ serial beamforming data $SCDBF_{(n+1)k}$ obtained from the $(n+1)^{th}$ radio frequency unit. Here, $N^{th}$ serial beamforming data is the $N^{th}$ beamforming data, $(N-1)^{th}$ serial beamforming data is a sum of the $N^{th}$ beamforming data and $(N-1)^{th}$ beamforming data,..., and $1^{st}$ serial beamforming data is a sum of the $N^{th}$ beamforming data to $1^{st}$ beamforming data. In other words, $1^{st}$ serial beamforming data $SCDBF_{1k}$ corresponding to the $k^{th}$ beam satisfies the following formula:

$$SCDBF_{1k} = \sum_{n=1}^{N} DBF\_1st_{nk}$$

There are a total of K pieces of serial beamforming data corresponding to the K beams, to form the $1^{st}$ serial beamforming data.

When K is 1, the $1^{st}$ serial beamforming data $SCDBF_1$ is changed to:

$$SCDBF_1 = \sum_{n=1}^{N} DBF\_1st_n$$

Each radio frequency unit may also include a digital front end module and an antenna module. The $n^{th}$ antenna module of the $n^{th}$ radio frequency unit may receive the second radio frequency data. The $n^{th}$ digital front end module may obtain the $n^{th}$ delay and perform the amplitude-phase weighting operation, and further send the $n^{th}$ serial beamforming data to the $(n-1)^{th}$ radio frequency unit or the baseband unit based on the $n^{th}$ delay and the $n^{th}$ beamforming data.

Similar to the foregoing descriptions, the $n^{th}$ antenna module may include an antenna, an FEM, and a DAC. The second radio frequency data may sequentially experience processing by the FEM and digital-to-analog conversion by the DAC, to form second processed data and transmit the second processed data to the $n^{th}$ digital front end module.

The $n^{th}$ digital front end module may include an $n^{th}$ time-domain beamforming submodule and an $n^{th}$ serial transmission submodule. The $n^{th}$ time-domain beamforming submodule may perform amplitude-phase weighting to obtain the $n^{th}$ beamforming data. The $n^{th}$ time-domain beamforming submodule may further include a correction submodule, and the correction submodule may include a baseband data buffer submodule, a delay measurement submodule, and an amplitude and phase measurement submodule.

The delay measurement submodule may measure the $n^{th}$ relative delay and determine the $n^{th}$ delay, to implement time synchronization of serial combination of different radio frequency units.

The amplitude and phase measurement submodule may measure amplitude and phase differences between radio frequency channels in the transceiver apparatus, that is, may measure amplitude weight offset values and phase weight offset values.

For details about delay measurement, details about amplitude-phase weighting, and details about system module division, refer to related descriptions of the transceiver apparatus serving as the sending apparatus. Details are not described herein again.

This application further provides a transceiver system, including a baseband unit and the foregoing transceiver apparatus. The baseband unit is connected to the $1^{st}$ radio frequency unit of the transceiver apparatus. In the transceiver system, the baseband unit and the transceiver apparatus may be separate, or may be one device, for example, the transceiver apparatus is used as a part of the entire device. For related details, refer to the foregoing descriptions. Details are not described herein again.

This application further provides a sending apparatus and a receiving apparatus. Structures of the sending apparatus and the receiving apparatus may be similar to the structure shown in FIG. 3 or FIG. 4. The sending apparatus is configured to implement a function of the transceiver apparatus shown in FIG. 3 when the transceiver apparatus is used as the sending apparatus, and the receiving apparatus is configured to implement a function of the transceiver apparatus shown in FIG. 3 when the transceiver apparatus is used as the receiving apparatus. For each functional module and corresponding details, refer to the descriptions of embodiments in FIG. 3. Details are not described herein again.

This application further provides a communication device. The communication device includes a baseband unit, configured to obtain $1^{st}$ serial beamforming data from a $1^{st}$ radio frequency unit or send first baseband data to the $1^{st}$ radio frequency unit. For details about the $1^{st}$ serial beamforming data, the $1^{st}$ radio frequency unit, and the first baseband data, refer to the foregoing descriptions. Details are not described herein again.

This application further provides a sending method and a receiving method. The sending method and the receiving method are applied to the sending apparatus and the receiving apparatus mentioned above, or are applied to the transceiver apparatus mentioned above. For specific details, refer to the foregoing descriptions. Details are not described herein again.

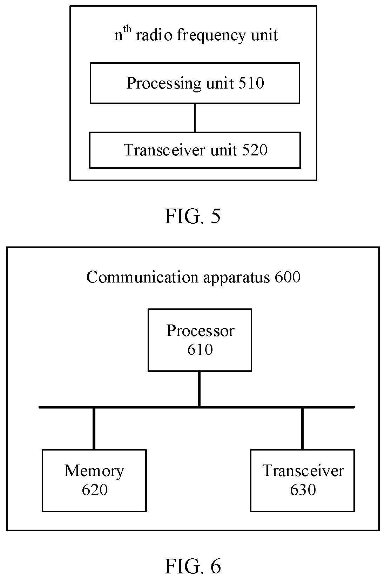

This application further provides a communication apparatus. The communication apparatus includes N radio frequency units connected in series. The N radio frequency units connected in series include a $1^{st}$ radio frequency unit to an $N^{th}$ radio frequency unit, where an $n^{th}$ radio frequency unit is any one of the $1^{st}$ radio frequency unit to the $N^{th}$ radio frequency unit, n and N are integers, and $1 \leq n \leq N$. As shown in FIG. 5, the $n^{th}$ radio frequency unit includes a processing unit 510 and a transceiver unit 520. The communication apparatus belongs to a communication system, the communication system includes the baseband unit and the communication apparatus, and the baseband unit may be connected to the $1^{st}$ radio frequency unit.

In an embodiment, the communication apparatus is equivalent to the sending apparatus mentioned above or implements functions or modules of the transceiver apparatus when the transceiver apparatus is used as the sending apparatus. The $n^{th}$ radio frequency unit is configured to implement functions or modules of the sending apparatus or the transceiver apparatus when the transceiver apparatus is used as the sending apparatus.

Specifically, the processing unit 510 is configured to obtain an $n^{th}$ delay, where the $n^{th}$ delay indicates a delay of data transmission between the $n^{th}$ radio frequency unit and a reference radio frequency unit in the N radio frequency units. The transceiver unit 520 is configured to obtain the first baseband data from the baseband unit (when n=1) or an $(n-1)^{th}$ radio frequency unit (when $1 < n \leq N$). The processing unit 510 is further configured to perform a first operation on the first baseband data based on the $n^{th}$ delay to obtain first radio frequency data, and transmit the first radio frequency data, where the first operation includes an amplitude-phase weighting operation.

Optionally, the reference radio frequency unit is the $N^{th}$ radio frequency unit. When $1 \leq n \leq N-1$, the processing unit 510 is further configured to: measure an $n^{th}$ relative delay, where the $n^{th}$ relative delay indicates a delay of data transmission between the $n^{th}$ radio frequency unit and an $(n+1)^{th}$ radio frequency unit; and determine the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

Optionally, the transceiver unit 520 is further configured to obtain beam information, where the beam information indicates pitch angles and azimuth angles of K transmit beams, K is an integer, and $K \geq 1$. The processing unit 510 is further configured to: determine, based on the beam information and positions of M antennas of the $n^{th}$ radio frequency unit in an antenna array of the sending apparatus, amplitude weights and phase weights of M radio frequency channels of the $n^{th}$ radio frequency unit corresponding to each of the K transmit beams, where the M antennas are in a one-to-one correspondence with the M radio frequency channels, M is an integer, and $M \geq 1$; and perform the amplitude-phase weighting operation based on the amplitude weights and the phase weights.

Optionally, the processing unit 510 is further configured to: measure amplitude weight offset values and phase weight offset values of the M radio frequency channels corresponding to each of the K transmit beams; determine, based on the beam information and the positions of the M antennas of the $n^{th}$ radio frequency unit in the antenna array of the sending apparatus, theoretical amplitude weights and theoretical phase weights of the M radio frequency channels corresponding to each of the K transmit beams; determine the amplitude weights based on the theoretical amplitude weights and the amplitude weight offset values; and determine the phase weights based on the theoretical phase weights and the phase weight offset values.

Optionally, the processing unit 510 is further configured to: obtain first processed data from an $n^{th}$ digital front end module, and perform digital-to-analog conversion on the first processed data, where the first processed data is data obtained by processing the first baseband data through the $n^{th}$ digital front end module.

Optionally, the $n^{th}$ delay is used to adjust time for performing digital-to-analog conversion on the first processed data.

Optionally, data before and after the $n^{th}$ radio frequency unit performs the amplitude-phase weighting operation satisfies the following formula:

$$D_m = p \times \sum_{k=1}^{K} E_k \times A_{mk} e^{j\theta_{mk}}$$

Herein, p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of transmit beams, and j is an imaginary number symbol.

In another embodiment, the communication apparatus is equivalent to the receiving apparatus mentioned above or implements functions or modules of the transceiver apparatus when the transceiver apparatus is used as the receiving apparatus. The $n^{th}$ radio frequency unit is configured to implement functions or modules of the receiving apparatus or the transceiver apparatus when the transceiver apparatus is used as the receiving apparatus.

Specifically, the processing unit 510 is configured to: obtain an $n^{th}$ delay, where the $n^{th}$ delay indicates a delay of data transmission between the $n^{th}$ radio frequency unit and a reference radio frequency unit in the N radio frequency units; receive second radio frequency data; and perform a second operation on the second radio frequency data to obtain $n^{th}$ beamforming data, where the second operation includes an amplitude-phase weighting operation. The transceiver unit 520 is configured to send $n^{th}$ serial beamforming data to an $(n-1)^{th}$ radio frequency unit (when 1<n≤N) or the baseband unit (when n=1) based on the $n^{th}$ delay and the $n^{th}$ beamforming data, where the $n^{th}$ serial beamforming data is a sum of the $N^{th}$ beamforming data and the $n^{th}$ beamforming data.

Optionally, the reference radio frequency unit is the $N^{th}$ radio frequency unit. When 1≤n≤N-1, the processing unit 510 is further configured to: measure an $n^{th}$ relative delay, where the $n^{th}$ relative delay indicates a delay of data transmission between the $n^{th}$ radio frequency unit and an $(n+1)^{th}$ radio frequency unit; and determine the $n^{th}$ delay based on an $(n+1)^{th}$ delay obtained from the $(n+1)^{th}$ radio frequency unit and the $n^{th}$ relative delay, where the $(n+1)^{th}$ delay is a sum of an $N^{th}$ relative delay to an $(n+1)^{th}$ relative delay, and the $N^{th}$ relative delay is 0.

Optionally, the transceiver unit 520 is further configured to obtain beam information, where the beam information indicates pitch angles and azimuth angles of K receive beams, K is an integer, and K≥1. The processing unit 510 is further configured to: determine, based on the beam information and positions of M antennas of the $n^{th}$ radio frequency unit in an antenna array of the receiving apparatus, amplitude weights and phase weights of M radio frequency channels of the $n^{th}$ radio frequency unit corresponding to each of the K receive beams, where the M antennas are in a one-to-one correspondence with the M radio frequency channels, M is an integer, and M≥1; and perform the amplitude-phase weighting operation based on the amplitude weights and the phase weights.

Optionally, the processing unit 510 is further configured to: measure amplitude weight offset values and phase weight offset values of the M radio frequency channels corresponding to each of the K receive beams; determine, based on the beam information and the positions of the M antennas of the $n^{th}$ radio frequency unit in the antenna array of the receiving apparatus, theoretical amplitude weights and theoretical phase weights of the M radio frequency channels corresponding to each of the K beams; determine the amplitude weights based on the theoretical amplitude weights and the amplitude weight offset values; and determine the phase weights based on the theoretical phase weights and the phase weight offset values.

Optionally, the processing unit 510 is further configured to generate the $n^{th}$ serial beamforming data, where the $n^{th}$ delay is used to adjust time for generating the $n^{th}$ serial beamforming data.

Optionally, data before and after the $n^{th}$ radio frequency unit performs the amplitude-phase weighting operation satisfies the following formula:

$$E_{mk} = S_m \times \sum_{k=1}^{K} A_{mk} e^{j\theta_{mk}}$$

$$DBF\_1st_{nk} = \sum_{m=1}^{M} E_{mk}$$

Herein, $S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol.

Optionally, $1^{st}$ serial beamforming data satisfies the following formula:

$$SCDBF_{1k} = \sum_{n=1}^{N} DBF\_1st_{nk}$$

As shown in FIG. 6, an embodiment of this application further provides a communication apparatus 600. The communication apparatus 600 shown in FIG. 6 includes a processor 610, a memory 620, and a transceiver 630. The processor 610 is coupled to the memory 620, and is configured to execute instructions stored in the memory 620, to control the transceiver 630 to send a signal and/or receive a signal.

It should be understood that the processor 610 and the memory 620 may be integrated into one processing apparatus, and the processor 610 is configured to execute program code stored in the memory 620, to implement the foregoing function. During specific implementation, the memory 620 may also be integrated into the processor 610, or independent of the processor 610. It should be understood that the processor 610 may alternatively correspond to each processing unit in the foregoing communication apparatus, and the transceiver 630 may correspond to each receiving unit and each sending unit in the foregoing communication apparatus.

It should be further understood that the transceiver 630 may include a receiver (which is also referred to as a receiver machine) and a transmitter (which is also referred to as a transmitter machine). The transceiver may further include an antenna, and there may be one or more antennas. The transceiver may alternatively be a communication interface or an interface circuit.

Specifically, the communication apparatus 600 may correspond to the apparatus in FIG. 3 to FIG. 5 according to embodiments of this application, or the $n^{th}$ radio frequency unit in FIG. 3 or FIG. 5.

When the communication apparatus 600 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods may be implemented by using a hardware integrated logical circuit in a processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that runs on a compute device and the compute device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or a network such as an internet interacting with another system through a signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A sending apparatus, wherein the sending apparatus comprises N radio frequency units connected in series;

   the N radio frequency units connected in series comprise a 1st radio frequency unit to an Nth radio frequency unit, an nth radio frequency unit

is any one of the 1st radio frequency unit to the Nth radio frequency unit, n and N are integers, and $1 \leq n \leq N$; and

the nth radio frequency unit is configured to:

obtain an nth delay, wherein the nth delay indicates a delay of data transmission between the nth radio frequency unit and a reference radio frequency unit in the N radio frequency units;

obtain first baseband data from a baseband unit or an (n-1)th radio frequency unit; and

perform a first operation on the first baseband data based on the nth delay to obtain first radio frequency data, and transmit the first radio frequency data, wherein the first operation comprises an amplitude-phase weighting operation, wherein

when n=1, the nth radio frequency unit is configured to obtain the first baseband data from the baseband unit; or when $1 < n \leq N$, the nth radio frequency unit is configured to obtain the first baseband data from the (n-1)th radio frequency unit.

2. The sending apparatus according to claim 1, wherein the reference radio frequency unit is the Nth radio frequency unit; and

when $1 \leq n \leq N-1$, the nth radio frequency unit is further configured to:

measure an nth relative delay, wherein the nth relative delay indicates a delay of data transmission between the nth radio frequency unit and an (n+1)th radio frequency unit; and

determine the nth delay based on an (n+1)th delay obtained from the (n+1)th radio frequency unit and the nth relative delay, wherein the (n+1)th delay is a sum of an Nth relative delay to an (n+1)th relative delay, and the Nth relative delay is 0.

3. The sending apparatus according to claim 1 or 2, wherein

the nth radio frequency unit is further configured to:

obtain beam information, wherein the beam information indicates pitch angles and azimuth angles of K transmit beams, K is an integer, and $K \geq 1$;

determine, based on the beam information and positions of M antennas of the nth radio frequency unit in an antenna array of the sending apparatus, amplitude weights and phase weights of M radio frequency channels of the nth radio frequency unit corresponding to each of the K transmit beams, wherein the M antennas are in a one-to-one correspondence with the M radio frequency channels, M is an integer, and $M \geq 1$; and

perform the amplitude-phase weighting operation based on the amplitude weights and the phase weights.

4. The sending apparatus according to claim 3, wherein the nth radio frequency unit is further configured to:

measure amplitude weight offset values and phase weight offset values of the M radio frequency channels corresponding to each of the K transmit beams;

determine, based on the beam information and the positions of the M antennas of the nth radio frequency unit in the antenna array of the sending apparatus, theoretical amplitude weights and theoretical phase weights of the M radio frequency channels corresponding to each of the K transmit beams;

determine the amplitude weights based on the theoretical amplitude weights and the amplitude weight offset values; and

determine the phase weights based on the theoretical phase weights and the phase weight offset values.

5. The sending apparatus according to any one of claims 1 to 4, wherein

the nth radio frequency unit comprises an nth digital front end module and an nth antenna module, wherein

the nth digital front end module is configured to:

obtain the nth delay;

obtain the first baseband data from the baseband unit or the (n-1)th radio frequency unit; and

perform the amplitude-phase weighting operation based on the nth delay; and

the nth antenna module is configured to transmit the first radio frequency data.

6. The sending apparatus according to claim 5, wherein the nth antenna module comprises a digital-to-analog converter DAC, wherein the DAC is configured to: obtain first processed data from the nth digital front end module, and perform digital-to-analog conversion on the first processed data, and the first processed data is data obtained by processing the first baseband data through the nth digital front end module.

7. The sending apparatus according to claim 6, wherein the nth delay is used to adjust time for performing digital-to-analog conversion on the first processed data.

8. The sending apparatus according to any one of claims 1 to 7, wherein data before and after the $n^{th}$ radio frequency unit performs the amplitude-phase weighting operation satisfies the following formula:

$$D_m = p \times \sum_{k=1}^{K} E_k \times A_{mk} e^{j\theta_{mk}},$$

wherein
p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of transmit beams, and j is an imaginary number symbol.

9. A receiving apparatus, wherein the receiving apparatus comprises N radio frequency units connected in series;

the N radio frequency units connected in series comprise a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$; and
the $n^{th}$ radio frequency unit is configured to:

obtain an $n^{th}$ delay, wherein the $n^{th}$ delay indicates a delay of data transmission between the $n^{th}$ radio frequency unit and a reference radio frequency unit in the N radio frequency units;
receive second radio frequency data, and perform a second operation on the second radio frequency data to obtain $n^{th}$ beamforming data, wherein the second operation comprises an amplitude-phase weighting operation; and
send $n^{th}$ serial beamforming data to an $(n-1)^{th}$ radio frequency unit or a baseband unit based on the $n^{th}$ delay and the $n^{th}$ beamforming data, wherein the $n^{th}$ serial beamforming data is a sum of $N^{th}$ beamforming data to the $n^{th}$ beamforming data, wherein
when n=1, the $n^{th}$ radio frequency unit is configured to send the $n^{th}$ serial beamforming data to the baseband unit; or when $1 < n \leq N$, the $n^{th}$ radio frequency unit is configured to send the $n^{th}$ serial beamforming data to the $(n-1)^{th}$ radio frequency unit.

10. The receiving apparatus according to claim 9, wherein the reference radio frequency unit is the $N^{th}$ radio frequency unit; and
when $1 \leq n \leq N-1$, the $n^{th}$ radio frequency unit is further configured to:

measure an $n^{th}$ relative delay, wherein the $n^{th}$ relative delay indicates a delay of data transmission between the $n^{th}$ radio frequency unit and an $(n+1)^{th}$ radio frequency unit; and
determine the $n^{th}$ delay based on an $(n+1)^{th}$ delay obtained from the $(n+1)^{th}$ radio frequency unit and the $n^{th}$ relative delay, wherein the $(n+1)^{th}$ delay is a sum of an $N^{th}$ relative delay to an $(n+1)^{th}$ relative delay, and the $N^{th}$ relative delay is 0.

11. The receiving apparatus according to claim 9 or 10, wherein
the $n^{th}$ radio frequency unit is further configured to:

obtain beam information, wherein the beam information indicates pitch angles and azimuth angles of K receive beams, K is an integer, and $K \geq 1$;
determine, based on the beam information and positions of M antennas of the $n^{th}$ radio frequency unit in an antenna array of the receiving apparatus, amplitude weights and phase weights of M radio frequency channels of the $n^{th}$ radio frequency unit corresponding to each of the K receive beams, wherein the M antennas are in a one-to-one correspondence with the M radio frequency channels, M is an integer, and $M \geq 1$; and
perform the amplitude-phase weighting operation based on the amplitude weights and the phase weights.

12. The receiving apparatus according to claim 11, wherein
the $n^{th}$ radio frequency unit is further configured to:

measure amplitude weight offset values and phase weight offset values of the M radio frequency channels corresponding to each of the K receive beams;
determine, based on the beam information and the positions of the M antennas of the $n^{th}$ radio frequency unit in the antenna array of the receiving apparatus, theoretical amplitude weights and theoretical phase weights of the M radio frequency channels corresponding to each of the K beams;
determine the amplitude weights based on the theoretical amplitude weights and the amplitude weight offset values; and
determine the phase weights based on the theoretical phase weights and the phase weight offset values.

13. The receiving apparatus according to any one of claims 9 to 12, wherein

the $n^{th}$ radio frequency unit comprises an $n^{th}$ digital front end module and an $n^{th}$ antenna module, wherein
the $n^{th}$ antenna module is configured to:

receive the second radio frequency data; and
the n digital front end module is configured to:

obtain the $n^{th}$ delay;
perform the amplitude-phase weighting operation; and
send the $n^{th}$ serial beamforming data to the $(n-1)^{th}$ radio frequency unit or the baseband unit based on the $n^{th}$ delay and the $n^{th}$ beamforming data.

14. The receiving apparatus according to claim 13, wherein the $n^{th}$ radio frequency unit is further configured to:
generate the $n^{th}$ serial beamforming data, wherein the $n^{th}$ delay is used to adjust time for generating the $n^{th}$ serial beamforming data.

15. The receiving apparatus according to any one of claims 9 to 14, wherein data before and after the $n^{th}$ radio frequency unit performs the amplitude-phase weighting operation satisfies the following formula:

$$E_{mk} = S_m \times \sum_{k=1}^{K} A_{mk} e^{j\theta_{mk}}$$

$$DBF\_1st_{nk} = \sum_{m=1}^{M} E_{mk},$$

wherein
$S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol.

16. The receiving apparatus according to claim 15, wherein $1^{st}$ serial beamforming data satisfies the following formula:

$$SCDBF_{1k} = \sum_{n=1}^{N} DBF\_1st_{nk}$$

17. A sending method, wherein the sending method is applied to a sending apparatus, the sending apparatus comprises N radio frequency units connected in series, the N radio frequency units connected in series comprise a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$; and the method comprises:

obtaining, by the $n^{th}$ radio frequency unit, an $n^{th}$ delay, wherein the $n^{th}$ delay indicates a delay of data transmission between the $n^{th}$ radio frequency unit and a reference radio frequency unit in the N radio frequency units;
obtaining, by the $n^{th}$ radio frequency unit, first baseband data from a baseband unit or an $(n-1)^{th}$ radio frequency unit; and
performing, by the $n^{th}$ radio frequency unit, a first operation on the first baseband data based on the $n^{th}$ delay to obtain first radio frequency data, and transmitting the first radio frequency data, wherein the first operation comprises an amplitude-phase weighting operation, wherein
when n=1, the $n^{th}$ radio frequency unit obtains the first baseband data from the baseband unit; or when $1 < n \leq N$, the $n^{th}$ radio frequency unit obtains the first baseband data from the $(n-1)^{th}$ radio frequency unit.

18. The sending method according to claim 17, wherein the reference radio frequency unit is the $N^{th}$ radio frequency unit, and when $1 \leq n \leq N-1$, obtaining, by the $n^{th}$ radio frequency unit, the $n^{th}$ delay comprises:

measuring, by the $n^{th}$ radio frequency unit, an $n^{th}$ relative delay, wherein the $n^{th}$ relative delay indicates a delay of data transmission between the $n^{th}$ radio frequency unit and an $(n+1)^{th}$ radio frequency unit; and
determining, by the $n^{th}$ radio frequency unit, the $n^{th}$ delay based on an $(n+1)^{th}$ delay obtained from the $(n+1)^{th}$ radio frequency unit and the $n^{th}$ relative delay, wherein the $(n+1)^{th}$ delay is a sum of an $N^{th}$ relative delay to an $(n+1)^{th}$ relative delay, and the $N^{th}$ relative delay is 0.

19. The sending method according to claim 17 or 18, wherein the method further comprises:

obtaining, by the $n^{th}$ radio frequency unit, beam information, wherein the beam information indicates pitch angles and azimuth angles of K transmit beams, K is an integer, and K≥1; determining, by the $n^{th}$ radio frequency unit based on the beam information and positions of M antennas of the $n^{th}$ radio frequency unit in an antenna array of the sending apparatus, amplitude weights and phase weights of M radio frequency channels of the $n^{th}$ radio frequency unit corresponding to each of the K transmit beams, wherein the M antennas are in a one-to-one correspondence with the M radio frequency channels, M is an integer, and M≥1; and performing, by the $n^{th}$ radio frequency unit, the amplitude-phase weighting operation comprises:

performing, by the $n^{th}$ radio frequency unit, the amplitude-phase weighting operation based on the amplitude weights and the phase weights.

20. The sending method according to claim 19, wherein the method further comprises:

measuring, by the $n^{th}$ radio frequency unit, amplitude weight offset values and phase weight offset values of the M radio frequency channels corresponding to each of the K transmit beams; and

determining, by the $n^{th}$ radio frequency unit based on the beam information and the positions of the M antennas of the $n^{th}$ radio frequency unit in the antenna array of the sending apparatus, the amplitude weights and the phase weights of the M radio frequency channels of the $n^{th}$ radio frequency unit corresponding to each of the K transmit beams comprises:

determining, by the $n^{th}$ radio frequency unit based on the beam information and the positions of the M antennas of the $n^{th}$ radio frequency unit in the antenna array of the sending apparatus, theoretical amplitude weights and theoretical phase weights of the M radio frequency channels corresponding to each of the K transmit beams; determining, by the $n^{th}$ radio frequency unit, the amplitude weights based on the theoretical amplitude weights and the amplitude weight offset values; and determining, by the $n^{th}$ radio frequency unit, the phase weights based on the theoretical phase weights and the phase weight offset values.

21. The sending method according to any one of claims 17 to 20, wherein

the $n^{th}$ radio frequency unit comprises an $n^{th}$

digital front end module and an $n^{th}$ antenna module, wherein
the $n^{th}$ digital front end module obtains the $n^{th}$ delay;
the $n^{th}$ digital front end module obtains the first baseband data from the baseband unit or the $(n-1)^{th}$ radio frequency unit;
the $n^{th}$ digital front end module performs the amplitude-phase weighting operation based on the $n^{th}$ delay; and
the $n^{th}$ antenna module transmits the first radio frequency data.

22. The sending method according to claim 21, wherein the $n^{th}$ antenna module comprises a digital-to-analog converter DAC, and the method further comprises:

obtaining, by the DAC, first processed data from the $n^{th}$ digital front end module;
performing, by the DAC, digital-to-analog conversion on the first processed data, wherein the first processed data is data obtained by processing the first baseband data through the $n^{th}$ digital front end module.

23. The sending method according to claim 22, wherein the $n^{th}$ delay is used to adjust time for performing digital-to-analog conversion on the first processed data.

24. The sending method according to any one of claims 17 to 23, wherein data before and after the $n^{th}$ radio frequency unit performs the amplitude-phase weighting operation satisfies the following formula:

$$D_m = p \times \sum_{k=1}^{K} E_k \times A_{mk} e^{j\theta_{mk}},$$

wherein
p is a scaling coefficient, $E_k$ is data corresponding to a $k^{th}$ beam before amplitude-phase weighting is performed, $D_m$ is data corresponding to an $m^{th}$ radio frequency channel after amplitude-phase weighting is performed, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of transmit beams, and j is an imaginary number symbol.

25. A receiving method, wherein the receiving method is applied to a receiving apparatus, the receiving apparatus comprises N radio frequency units connected in series, the N radio frequency units connected in series comprise a $1^{st}$ radio frequency unit to an $N^{th}$ radio frequency unit, an $n^{th}$ radio frequency unit is any one of the $1^{st}$ radio frequency unit to the $N^{th}$ radio frequency unit, n and N are integers, and $1 \leq n \leq N$; and the method comprises:

obtaining, by the $n^{th}$ radio frequency unit, an $n^{th}$ delay, wherein the $n^{th}$ delay indicates a delay of data transmission between the $n^{th}$ radio frequency unit and a reference radio frequency unit in the N radio frequency units;

receiving, by the $n^{th}$ radio frequency unit, second radio frequency data, and performing a second operation on the second radio frequency data to obtain $n^{th}$ beamforming data, wherein the second operation comprises an amplitude-phase weighting operation; and

sending, by the $n^{th}$ radio frequency unit, $n^{th}$ serial beamforming data to an $(n-1)^{th}$ radio frequency unit or a baseband unit based on the $n^{th}$ delay and the $n^{th}$ beamforming data, wherein the $n^{th}$ serial beamforming data is a sum of $N^{th}$ beamforming data to the $n^{th}$ beamforming data, wherein

when n=1, the $n^{th}$ radio frequency unit sends the $n^{th}$ serial beamforming data to the baseband unit; or when $1 < n \leq N$, the $n^{th}$ radio frequency unit sends the $n^{th}$ serial beamforming data to the $(n-1)^{th}$ radio frequency unit.

26. The receiving method according to claim 25, wherein the reference radio frequency unit is the $N^{th}$ radio frequency unit, and when $1 \leq n \leq N-1$, obtaining, by the $n^{th}$ radio frequency unit, the $n^{th}$ delay comprises:

measuring, by the $n^{th}$ radio frequency unit, an $n^{th}$ relative delay, wherein the $n^{th}$ relative delay indicates a delay of data transmission between the $n^{th}$ radio frequency unit and an $(n+1)^{th}$ radio frequency unit; and

determining, by the $n^{th}$ radio frequency unit, the $n^{th}$ delay based on an $(n+1)^{th}$ delay obtained from the $(n+1)^{th}$ radio frequency unit and the $n^{th}$ relative delay, wherein the $(n+1)^{th}$ delay is a sum of an $N^{th}$ relative delay to an $(n+1)^{th}$ relative delay, and the $N^{th}$ relative delay is 0.

27. The receiving method according to claim 25 or 26, wherein the method further comprises:

obtaining, by the $n^{th}$ radio frequency unit, beam information, wherein the beam information indicates pitch angles and azimuth angles of K receive beams, K is an integer, and $K \geq 1$; and

determining, by the $n^{th}$ radio frequency unit based on the beam information and positions of M antennas of the $n^{th}$ radio frequency unit in an antenna array of the receiving apparatus, amplitude weights and phase weights of M radio frequency channels of the $n^{th}$ radio frequency unit corresponding to each of the K receive beams, wherein the M antennas are in a one-to-one correspondence with the M radio frequency channels, M is an integer, and $M \geq 1$; and

performing, by the $n^{th}$ radio frequency unit, the amplitude-phase weighting operation comprises:

performing, by the $n^{th}$ radio frequency unit, the amplitude-phase weighting operation based on the amplitude weights and the phase weights.

28. The receiving method according to claim 27, wherein the method further comprises:

measuring, by the $n^{th}$ radio frequency unit, amplitude weight offset values and phase weight offset values of the M radio frequency channels corresponding to each of the K receive beams; and

determining, by the $n^{th}$ radio frequency unit based on the beam information and the positions of the M antennas of the $n^{th}$ radio frequency unit in the antenna array of the receiving apparatus, the amplitude weights and the phase weights of the M radio frequency channels of the $n^{th}$ radio frequency unit corresponding to each of the K receive beams comprises:

determining, by the $n^{th}$ radio frequency unit based on the beam information and the positions of the M antennas of the $n^{th}$ radio frequency unit in the antenna array of the receiving apparatus, theoretical amplitude weights and theoretical phase weights of the M radio frequency channels corresponding to each of the K receive beams;

determining, by the $n^{th}$ radio frequency unit, the amplitude weights based on the theoretical amplitude weights and the amplitude weight offset values; and

determining, by the $n^{th}$ radio frequency unit, the phase weights based on the theoretical phase weights and the phase weight offset values.

29. The receiving method according to any one of claims 25 to 28, wherein

the $n^{th}$ radio frequency unit comprises an $n^{th}$ digital front end module and an $n^{th}$ antenna module, wherein

the $n^{th}$ antenna module receives the second radio frequency data;

the n digital front end module obtains the $n^{th}$ delay;

the n digital front end module performs the amplitude-phase weighting operation; and

the n digital front end module sends the $n^{th}$ serial beamforming data to the $(n-1)^{th}$ radio frequency unit or the baseband unit based on the $n^{th}$ delay and the $n^{th}$ beamforming data.

30. The receiving method according to claim 29, wherein the method further comprises:
generating, by the $n^{th}$ digital front end module, the $n^{th}$ serial beamforming data, wherein the $n^{th}$ delay is used to adjust time for generating the $n^{th}$ serial beamforming data.

31. The receiving method according to any one of claims 25 to 30, wherein data before and after the $n^{th}$ radio frequency unit performs the amplitude-phase weighting operation satisfies the following formula:

$$E_{mk} = S_m \times \sum_{k=1}^{K} A_{mk} e^{j\theta_{mk}}$$

$$DBF\_1st_{nk} = \sum_{m=1}^{M} E_{mk},$$

wherein
$S_m$ is data corresponding to an $m^{th}$ channel before amplitude-phase weighting is performed, $E_{mk}$ is channel beamforming data corresponding to the $m^{th}$ channel and a $k^{th}$ beam, $DBF\_1st_{nk}$ is $n^{th}$ beamforming data corresponding to the $k^{th}$ beam, $A_{mk}$ and $\theta_{mk}$ are respectively an amplitude weight and a phase weight corresponding to the $k^{th}$ beam and the $m^{th}$ channel, M is a quantity of radio frequency channels of the $n^{th}$ radio frequency unit, K is a quantity of receive beams, and j is an imaginary number symbol.

32. The receiving method according to claim 31, wherein $1^{st}$ serial beamforming data satisfies the following formula:

$$SCDBF_{1k} = \sum_{n=1}^{N} DBF\_1st_{nk}$$

33. A sending system, comprising a baseband unit and the sending apparatus according to any one of claims 1 to 8, wherein the baseband unit is connected to the $1^{st}$ radio frequency unit.

34. A receiving system, comprising a baseband unit and the receiving apparatus according to any one of claims 9 to 16, wherein the baseband unit is connected to the $1^{st}$ radio frequency unit.

35. A communication apparatus, comprising:
a processor, wherein the processor is coupled to a memory, and the processor is configured to invoke computer program instructions stored in the memory, to perform the method according to any one of claims 17 to 24 and/or the method according to any one of claims 25 to 32.

36. A chip, comprising a processor and a communication interface, wherein the communication interface is configured to receive data and/or information, and transmit the received data and/or information to the processor, and the processor processes the data and/or information to perform the method according to any one of claims 17 to 24 and/or the method according to any one of claims 25 to 32.

37. A computer-readable storage medium, wherein the computer-readable storage medium stores instructions, and when the instructions are run on a computer, the computer is enabled to perform the method according to any one of claims 17 to 24 and/or the method according to any one of claims 25 to 32.

38. A computer program product, wherein the computer-readable storage medium stores instructions, and when the instructions are run on a computer, the computer is enabled to perform the method according to any one of claims 17 to 24 and/or the method according to any one of claims 25 to 32.

39. A communication system, comprising a network device and/or a terminal device, wherein the terminal device and/or the network device is configured to perform the method according to any one of claims 17 to 24 and/or the method according to any one of claims 25 to 32.

NGEO satellite     NGEO satellite     NGEO satellite

Core network
device

Beam  Beam  Beam
Beam  Beam

Beam  Beam
Beam  Beam

Beam  Beam
Beam  Beam

Beam  Beam
Beam  Beam

FIG. 1

FIG. 2

EP 4 787 729 A1

Transceiver apparatus

| Baseband unit | 1$^{st}$ radio frequency unit | ... | N$^{th}$ radio frequency unit |

FIG. 3

Transceiver apparatus

| 1st radio frequency unit | 2nd radio frequency unit | Nth radio frequency unit |

**1st radio frequency unit**

Digital front end module

Serial transmission submodule

Time domain beamforming submodule | Correction submodule

Antenna module

AD/ DA  ...  AD/ DA

FEM  ...  FEM

ANT  ...  ANT

**2nd radio frequency unit**

Digital front end module

Serial transmission submodule

Time domain beamforming submodule | Correction submodule

Antenna module

AD/ DA  ...  AD/ DA

FEM  ...  FEM

ANT  ...  ANT

**Nth radio frequency unit**

Digital front end module

Serial transmission submodule

Time domain beamforming submodule | Correction submodule

Antenna module

AD/ DA  ...  AD/ DA

FEM  ...  FEM

ANT  ...  ANT

1  2  3  4  5  6  7  8

...

FIG. 4

EP 4 787 729 A1

n<sup>th</sup> radio frequency unit

Processing unit 510

Transceiver unit 520

FIG. 5

Communication apparatus 600

Processor
610

Memory
620

Transceiver
630

FIG. 6

## INTERNATIONAL SEARCH REPORT

| International application No. |
| --- |
| **PCT/CN2024/127689** |

**A. CLASSIFICATION OF SUBJECT MATTER**

H04B7/06(2006.01)i; H04B7/08(2006.01)i

According to International Patent Classification (IPC) or to both national classification and IPC

**B. FIELDS SEARCHED**

Minimum documentation searched (classification system followed by classification symbols)

IPC:H04B; H04W; H04L

Documentation searched other than minimum documentation to the extent that such documents are included in the fields searched

Electronic data base consulted during the international search (name of data base and, where practicable, search terms used)

CNTXT, ENTXT, ENTXTC, WPABSC, CNKI, 3GPP: N个, 串联, 串行连接, 多个, 基带, 射频, 射频单元, 时延, 延时, baseband, delay, latency, N, series, radio frequency, serial connection, multi+

**C. DOCUMENTS CONSIDERED TO BE RELEVANT**

| Category* | Citation of document, with indication, where appropriate, of the relevant passages | Relevant to claim No. |
| --- | --- | --- |
| A | CN 102082586 A (CHINA MOBILE GROUP DESIGN INSTITUTE CO., LTD.) 01 June 2011 (2011-06-01)<br>description, paragraphs [0021]-[0024], and figure 4a | 1-39 |
| A | CN 116068491 A (HUAWEI TECHNOLOGIES CO., LTD.) 05 May 2023 (2023-05-05)<br>entire document | 1-39 |
| A | CN 1705260 A (HUAWEI TECHNOLOGIES CO., LTD.) 07 December 2005 (2005-12-07)<br>entire document | 1-39 |
| A | US 2016254890 A1 (HUAWEI TECHNOLOGIES CO., LTD.) 01 September 2016 (2016-09-01)<br>entire document | 1-39 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 January 2025** | **15 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/127689**

| Patent document cited in search report | | | Publication date (day/month/year) | Patent family member(s) | | | Publication date (day/month/year) |
|---|---|---|---|---|---|---|---|
| CN | 102082586 | A | 01 June 2011 | CN | 102082586 | B | 21 May 2014 |
| CN | 116068491 | A | 05 May 2023 | None | | | |
| CN | 1705260 | A | 07 December 2005 | None | | | |
| US | 2016254890 | A1 | 01 September 2016 | KR | 20160077143 | A | 01 July 2016 |
| | | | | KR | 101816467 | B1 | 08 January 2018 |
| | | | | US | 9954662 | B2 | 24 April 2018 |
| | | | | WO | 2015066884 | A1 | 14 May 2015 |
| | | | | EP | 3054743 | A1 | 10 August 2016 |
| | | | | EP | 3054743 | A4 | 23 November 2016 |
| | | | | EP | 3054743 | B1 | 26 June 2019 |
| | | | | CN | 105432138 | A | 23 March 2016 |
| | | | | IN | 201617015288 | A | 31 August 2016 |
| | | | | CN | 105432138 | B | 02 June 2020 |
| | | | | IN | 407515 | B | 30 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311436022